Europäisches Patentamt

European Patent Office

Office européen des brevets

(11) Publication number: 0 391 682
A2

# EUROPEAN PATENT APPLICATION

(21) Application number: 90303598.8

(51) Int. Cl.⁵: G01B 11/02

(22) Date of filing: 04.04.90

(30) Priority: 05.04.89 JP 87639/89

(43) Date of publication of application:
10.10.90 Bulletin 90/41

(84) Designated Contracting States:
DE FR GB

(71) Applicant: KANAI SCHOOL INCORPORATION
618, Gakuen 3-chome
Fukui-shi Fukui-ken(JP)

(72) Inventor: Kanai, Kenzo
1-8 Mishigakuencho
Fukui-shi, Fukui-ken(JP)
Inventor: Kanai, Norikane
2-4-23, Gakuen
Fukui-shi, Fukui-ken(JP)
Inventor: Ito, Hiroshi
B-508, 1-16 Aogein
Minoo-shi, Osaka-fu, Osaka(JP)

(74) Representative: Prutton, Roger et al
MARKS & CLERK Alpha Tower Suffolk Street
Queensway
Birmingham B1 1TT(GB)

(54) Method for measuring particulate size without contacting the particulate and related apparatus.

(57) A method and related apparatus are described for measuring the size of a particulate, without contacting the particulate, and therefore without extra forces on the particulate. Striped gaps of interference fringes at a plane surface (2) behind the particulate (G) which occur when a monochromatic beam is radiated on a particulate by means of a monochromatic light source (1, 11) are measured and used to derive a measure of the particulate size.

## FIG.1

EP 0 391 682 A2

**Method for Measuring Particulate Size Without Contacting The Particulate And Related Apparatus.**

## BACKGROUND OF THE INVENTION

This invention relates to a measuring method of particulate size without actually contacting the particulate and a related apparatus, and more particularly to a new method and an apparatus to measure the size of a particulate simply and rapidly based on interference fringes generated at striped gaps corresponding to the size of the particulate when a monochromatic beam is radiated on the particulate. By using this invention, improved quality control is available for ceramic powders, magnetic recording material powders and also powder metallurgy, and moreover it is possible to measure the size of solid state powders as well as liquid state powders, which benefits largely the industrial world.

As well known, about 200 years ago, Thomas Young advanced a theory that interference fringes can be observed at equivalent gaps and in a concentric condition caused by secondary spherical waves originating from the boudary of a substance when the beam is radiated on the substance. At that time, however, interference fringes were not obtained correctly at equivalent gaps, even when experiments were conducted based on the method suggested by Thomas Young, and therefore his theory was concluded to be in error. Thereafter, Young's theory has been studied by many scholars, and finally it came to be recognized as a correct theory. However, up to now actual experiments proving the above theory have not been conducted.

In view of this situation, the present inventor has repeated various experiments, in a trial and error manner, in order to prove this Young's theory. As a result, the inventor has found that the interference fringes appear in shade portions at equivalent gaps and in a concentric condition when a monochromatic laser beam is radiated on a particulate within about the range of 100~1000 micrometers. Further, he has developed the formula mentioned below based on four elements - a gap of interference fringes($\Delta x$), wavelength of monochromatic beam($\lambda$), diameter of a particulate (D), and the distance between the particulate and a place where interference fringe is measured :

$$\Delta x = \frac{\lambda Z}{D} \quad (1)$$

From the above formula, the size (D) of a particulate is obtainable through the derived formula below :

$$D = \frac{\lambda Z}{\Delta x} \quad (2)$$

This invention utilizes the above-described discoveries for measuring the size of a particulate.

Thus, the present invention has an object to provide a new measuring method and a related apparatus, by which the correct and rapid measuring of particulate size is available without any contact of the particulate.

The invention has another object to provide a new measuring method and a related apparatus to obtain a value for a size of very tiny particulates, even within a range of a few micrometers.

The present invention has a further object to provide a new method and a related apparatus to measure the size of a particulate regardless of whether the particulate is in a solid or liquid state.

This invention has an even further object to provide a new measuring method and a related apparatus to improve quality control for various powder materials such as ceramic powders and so on.

Other objects and many advantages of the instant invention will become more apparent from the following descriptions taken in conjunction with the accompanying drawings, in which like reference characters designate the same or similar parts throughout the figures thereof.

## SUMMARY OF THE INVENTION

This invention provides a measuring method of particulate size without any contact with the particulate and a related apparatus. A gap of interference fringes ($\Delta x$) which occurs on a plane surface behind a particulate is measured when a monochromatic beam is radiated on the particulate, and the obtained value-($\Delta x$) is used in the formula mentioned below :

$$D = \frac{\lambda Z}{\Delta x}$$

D = diameter of a particulate

$\lambda$ = wavelength of monochromatic beam

Z = distance between a particulate and measuring place

Through the formula, the diameter of a particulate(D) is obtained thereof.

## BRIEF DESCRIPTIONS OF THE DRAWINGS

The accompanying drawings, which are incorporated in and constitute a part of the specification, illustrate embodiments of the invention and, together with the descriptions, serve to explain the principles of the invention.

FIG.1 is a block diagram of the apparatus according to a first embodiment of the invention.

FIG.2 is a block diagram of the apparatus according to a second embodiment.

FIG.3 is a block diagram for the third embodiment.


DETAILED DESCRIPTION OF THE PREFERRED EMBODIMENTS

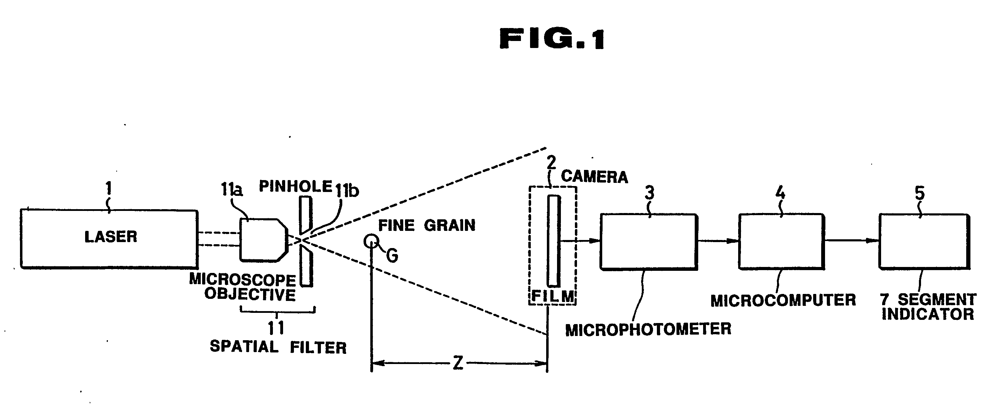

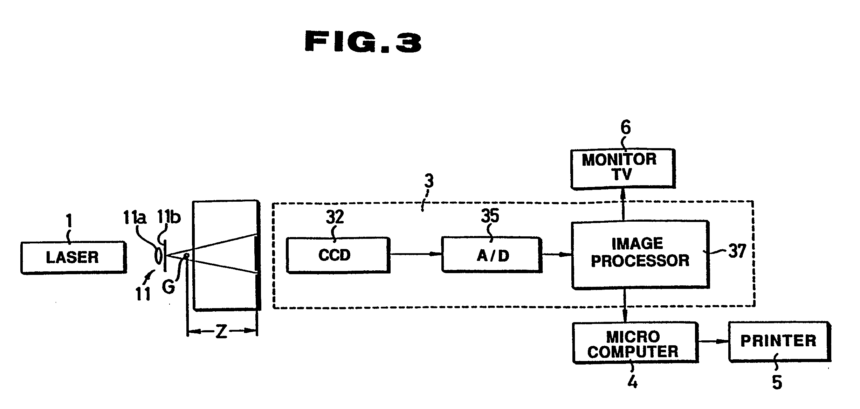

In FIG.1, reference numeral (1) indicates a light radiating means in the form of, e.g., an He-Ne laser generator, generating a monochromatic beam with a 632.8 nm wavelength. The laser beam caused by this generator(1) shines on a fine grain or particulate(G) via a so-called spatial filter(11) equipped with a microscope objective(11a) and a pinhole(11b). The image thereof, including shade created by the particulate(G), is photographed on film(21) included in a pattern recording means(2) in the form of a lenseless camera. In this embodiment e particulate(G) is merely dropped into the path of the laser beam. However, this drop method is not always required. Other methods, such as a vacuum drop method, a falling movement method between electrodes in the chamber if the particulate is of electrified quality and thus it is electrified therefore under the static electrical process or other chemical process, or a standstill method whereon the particulate is kept at standstill in the air by taking the power balance by use of particulate gravity, viscosity or other electric procedure, can be used.

Reference numeral(3) indicates a measuring means in the form of a microphotometer, which reacts with light variations caused by a gap of interference fringes and caused at the shade portions formed by the particulate(G) on the film(21), and thus the microphotometer outputs a signal of the gap($\Delta x$) by the changes of electric current value. Thus, the obtained signal($\Delta x$) is inputted into a microcomputer used as a calculation means(4), where the value($\Delta x$) is placed into the following formula :

$$D = \frac{\lambda Z}{\Delta x}$$

D = diameter of a particulate

$\lambda$ = wavelength of monochromatic beam

Z = distance between a particulate and measuring place

Then, the calculation is performed and the value signal is displayed as a digital number at a display means(5) in the form of a seven segment indicator.

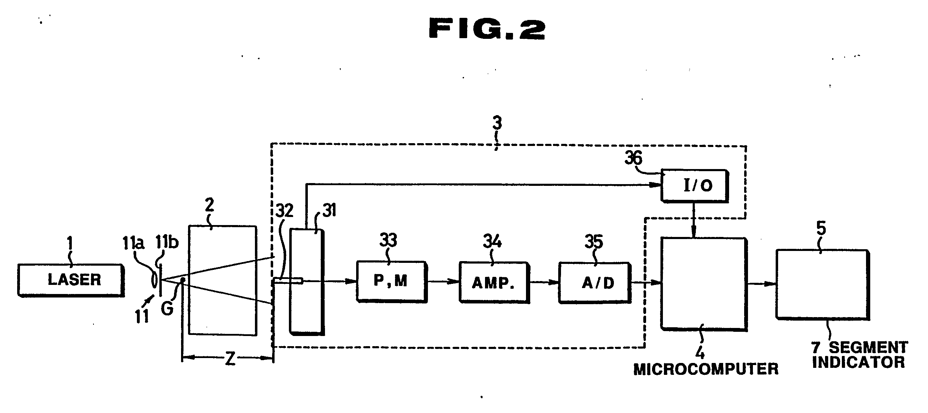

FIG.2 is an apparatus for the second embodiment including a photoelectric mechanism, and a measuring means(3) in the form of photographic equipment including a photomultiplier tube.

The measuring means(3) is disposed downstream in the path of the laser beam shining upon a particulate(G). The measuring means includes an optical fiber input section(32) driven and controlled by a pulse motor(31) ; a photomultiplier tube(33) which converts the variation of light entering the optical fiber input section(32) into an electrical signal for the output ; an amplifier(34) which amplifies the output of the photomultiplier tube(33) ; an A-D converter(35) which changes the signal outputted by the amplifier(34) into a digital number ; and an I-O processor(36) which measures scanning volume of the optical fiber input section(32).

The laser beam caused by the laser generator(1) shines upon the particulate(G), whereon the shades of interference fringes are formed, and the shade changes are inputted into the optical fiber input section(32) and are transmitted to the photomultiplier tube(33), whereupon they are changed into the display signal by the photoelectric effect and are transmitted to the amplifier(34) where the signal is inputted into the A-D converter(35) after it is amplified to the required signal to input into the calculation means(4), i.e., the microcomputer. This microcomputer makes an arithmetic operation on the scanning volume of the I-O processor(36) and on the signal transmitted through the A-D converter(35), and thus the size of the particulate is obtained correctly in an immediate manner and can be displayed on the display means(5).

FIG.3 indicates the third embodiment of this invention. In this instance, the measuring means(3) comprises a CCD image sensor(32), an A-D converter(35) and an imageprocessor(37). The beam radiating means(1) and pattern recording means(2) are exactly the same as in the first embodiment. The laser beam caused by the laser generator(1) shines upon the particulate(G) and the shade changes of interference fringes are formed on the pattern recording means(2), then they are stored at image-processor(37) via CCD image sensor(32) and A-D converter(35), whereupon the obtained image is furnished with light and shade treatment, whence the size of the particulate(G) is calculated in the microcomputer(4).

In this third embodiment the image processor(37) is adopted, which realizes the quite clear signal from the interference fringes and results in the minute measuring of the particulate size, while a television monitor can be also installed with the processor(37) in order that an actual observation on the particulate(G) can be performed in real time. As an indicator means(5), a dot printer can be used, whereas the obtained size of the particulate can be printed out accordingly.

## EXPERIMENTS

A glass ball, a chrome ball and a thin graphite column, each with a diameter smaller than 1mm, are prepared, and they are used in the apparatus of the first embodiment shown in FIG.1. A monochromatic beam with a wavelength of 632.8 nm radiated from a He-Ne laser generator(1) produces the following results on the film(21) of the camera(2) : Concerning the glass and chrome ball, interference fringes at equivalent gaps and in concentric condition are clearly observed around the shade portions of these objects(G). On the other hand, with regard to the graphite column, the interference fringes in the striped condition at equivalent gaps in series along the shade made by each side of the column are obtained clearly, while the interference fringes in wave condition at equivalent gaps are also observed clearly around the shade made by the corner of the column. These are the real interference fringes that Thomas Young advanced in his theory as he predicted 200 years ago. When the inventor tried this experiment with different materials such as liquid, wood and so on, it proved that the interference fringes depended upon only the diameter, and were not dependent on the type of the material at all.

Secondly, all gaps of interference fringes caused by the above mentioned glass ball, chrome ball and graphite column were read by the microphotometer (3) and a gap signal($\Delta_x$) was outputted accordingly, and it was inputted into the microcomputer(4) for the calculation, and the following results were shown in the digital number by the 7 segment indicator :

| D = diameter of the particulate | | |
| --- | --- | --- |
| Z = distance between the particulate and the film. | | |
| (1) With regard to the diameter(size) of glass ball. | | |
| Z(m) | $\Delta$% | D ± Average Error $\Delta$D |
| 0.1 | 0.0055 ± 0.0003 | 1.15 ± 0.09 |
| 0.2 | 0.0980 ± 0.002 | 1.29 ± 0.07 |
| 0.3 | 0.1460 ± 0.007 | 1.30 ± 0.07 |
| 0.4 | 0.2000 ± 0.005 | 1.27 ± 0.05 |
| 0.5 | 0.2520 ± 0.006 | 1.26 ± 0.04 |
| 0.6 | 0.2930 ± 0.005 | 1.30 ± 0.03 |

Concerning the average error $\Delta$D of the measured value D for the diameter of the particulate(= glass ball), the following formula is established :

$$\Delta D = \frac{\lambda Z}{\Delta x} \sqrt{\left(\frac{\partial_1}{\Delta x}\right)^2 + \left(\frac{\partial_2}{\Delta x}\right)^2 + \left(\frac{\partial_3}{\Delta x}\right)^2}$$

With the use of a microscope the diameter(D) of the particulate is measured and the result was as follows :

4

$(1.29 \pm 0.03) \times 10^{-3}$m

| (2) With regard to the diameter(size) of the chrome ball. | | |
|---|---|---|
| Z (m) | Δ% | D ± Average Error ΔD |
| 0.1 | 0.0062 ± 0.001 | 1.01 ± 0.01 |
| 0.2 | 0.1230 ± 0.001 | 1.03 ± 0.05 |
| 0.3 | 0.1880 ± 0.009 | 1.01 ± 0.05 |
| 0.4 | 0.2400 ± 0.010 | 1.10 ± 0.10 |
| 0.5 | 0.3080 ± 0.006 | 1.03 ± 0.03 |
| 0.6 | 0.3710 ± 0.004 | 1.02 ± 0.02 |

The measurement by the microscope for the diameter (D) of the particulate showed the following results :
$( 1.01 \pm 0.04) \times 10^{-3}$m
(3) With regard to the diameter(size) of the graphite column.

| i. Graphite column(a) | | |
|---|---|---|
| Z (m) | Δ% | D ± Average Error ΔD |
| 0.1 | 0.0068 ± 0.004 | 0.93 ± 0.05 |
| 0.2 | 0.1360 ± 0.003 | 0.93 ± 0.05 |
| 0.3 | 0.2050 ± 0.004 | 0.93 ± 0.03 |
| 0.4 | 0.2800 ± 0.040 | 0.90 ± 0.04 |
| 0.5 | 0.3440 ± 0.005 | 0.92 ± 0.02 |
| 0.6 | 0.4150 ± 0.006 | 0.91 ± 0.02 |

The measurement by the microscope of the diameter(D) of the particulate showed the following results :
$( 0.92 \pm 0.01) \times 10^{-3}$m

| ii. Graphite column (b) | | |
|---|---|---|
| Z (m) | Δ% | D ± Average Error ΔD |
| 0.1 | 0.1110 ± 0.003 | 0.57 ± 0.03 |
| 0.2 | 0.2230 ± 0.007 | 0.57 ± 0.03 |
| 0.3 | 0.3270 ± 0.009 | 0.57 ± 0.02 |
| 0.4 | 0.4380 ± 0.009 | 0.58 ± 0.02 |
| 0.5 | ·0.5600 ± 0.020 | 0.57 ± 0.02 |
| 0.6 | 0.6700 ± 0.010 | 0.57 ± 0.01 |

The measurement by the microscope of the diameter(D) of the particulate showed the following results :

$0.56 \times 10^{-3}$ m

As explained so far with the embodiments and experiments, the present invention realizes the practical measurement of a particulate by recording the shade portions of the particulate caused. When a monochromatic beam is radiated on the particulate, but without actual contact with the relative particulate, which is advisable since the force of the contact could transform the particulate size. This invention also enables correct measurement of the size of the particulate up to a few microns scale with the exact form as it is, whether it is in a cohesive liquid condition or in a solid state condition, regardless of the material. Therefore, the invention provides improved quality control for colloidal solutions and ceramic powders in various industrial fields.

The foregoing is considered illustive only of the principles of the invention. Further, since numerous modifications and changes will readily occur to those skilled in the art, it is not desired to limit the invention to the exact construction and operation shown and described. Accordingly, all suitable modifications and equivalents may be resorted to that fall within the scope of the invention and the appended claims.

**Claims**

1. A method for measuring a size of a particulate without contacting the particulate, comprising the steps of:

   (a) radiating a monochromatic beam past a particulate;

   (b) measuring a gap($\Delta\chi$) of interference fringes occurring on a plane surface behind the particulate; and

   (c) obtaining the size of the particulate based on the obtained value($\Delta\chi$).

2. The method as recited in claim 1, wherein the size of the particulate is obtained using the formula :

$$D = \frac{\lambda Z}{\Delta x}$$

in which D is the diameter of the particulate ; $\lambda$ is the wavelength of radiating monochromatic beam ; and Z is the distance between the particulate and a place the gap is measured.

3. The method according to claim 1, wherein the interference fringes are recorded on film and the gap of interference fringes is measured by a microphotometer.

4. The method according to Claim 1 or Claim 2, wherein the monochromatic beam is a laser beam.

5. An apparatus for measuring particulate size without contacting the particulate, comprising:

   (a) means for directing a monochromatic beam on a path;

   (b) means positioned in the path for recording a pattern of interference fringes occurring in shade portions of the particulate when the monochromatic beam is interupted by the particulate(G) ;

   (c) means for measuring a gap of recorded interference fringes and outputting a signal representative of the gap; and

   (d) means for calculating the size of the particulate based on the signal.

6. The apparatus according to Claim 4, wherein the beam radiating means is an He-Ne laser generator.

7. The apparatus according to Claim 4 or Claim 5, wherein the pattern recording means is an optical camera for recording an image on film.

8. The apparatus according to any of Claim 4,5 or 6, wherein the measuring means is a microphotometer including photoelectric elements, said microphotometer outputting the gap signal as a variation of voltage based on the gap of the interference fringes photographed over the film of the pattern recording means.

9. The apparatus according to Claim 4 or Claim 5, wherein the pattern recording means is a camera including a CCD image sensor.

10. The apparatus according to claim 8, wherein the measuring means is an A-D converter, which makes an A-D conversion of the signal of interference fringes photographed by the pattern recording means and outputs a pulse number obtained in proportion to the size of the interference fringes gap as the signal value($\Delta\chi$) of the gap signal for the counter.

11. The apparatus according to any of Claim 4,5,6 7,8 or 9, wherein the calculation means is a microcomputer.

# FIG.1

EP 0 391 682 A2

# FIG.3

EP 0 391 682 A2

# FIG.2

LASER 1

11a 11b
11
G

2
Z

3

31
32

33 P,M

34 AMP.

35 A/D

36 I/O

4
MICROCOMPUTER

5
7 SEGMENT INDICATOR